# EUROPÄISCHE PATENTSCHRIFT

(11) **EP 1 893 898 B1**
(45) Veröffentlichungstag und Bekanntmachung des Hinweises auf die Patenterteilung: **02.06.2010**
(21) Anmeldenummer: 06741035.7
(22) Anmeldetag: 13.06.2006
(51) Int. Cl.: F16J 15/00, F16J 15/18, F16J 15/32, F04D 29/10

(54) **RADIALE DICHTUNGSVORRICHTUNG**
RADIAL SEALING DEVICE
DISPOSITIF D'ETANCHEITE RADIAL

(30) Priorität: 21.06.2005 AT 10482005
(43) Veröffentlichungstag der Anmeldung: 05.03.2008
(73) Patentinhaber: Kopp, Erwin, 5622 Goldegg/Pongau (AT)
(72) Erfinder: Kopp, Erwin, 5622 Goldegg/Pongau (AT)
(74) Vertreter: Babeluk, Michael
(86) Internationale Anmeldenummer: PCT/AT2006/000236
(87) Internationale Veröffentlichungsnummer: WO 2006/135944

(56) Entgegenhaltungen:
- EP-A- 0 374 713
- DE-A1- 2 414 406
- DE-A1- 2 643 769
- DE-A1- 19 904 761
- DE-B- 1 037 269
- US-A- 5 609 468

## Beschreibung

Die Erfindung betrifft eine Radialpumpe, insbesondere Schlammpumpe, die ein Gehäuse mit einer darin befindlichen Pumpenkammer und ein auf einer Pumpenwelle befestigtes Pumpenlaufrad aufweist, mit einer radialen Dichtungsvorrichtung, wobei in einem Ringraum zwischen Pumpenwelle und Gehäuse zumindest ein, vorzugsweise durch zumindest eine Stopfbuchsenpackung gebildetes, erstes Dichtmittel angeordnet ist, und wobei ein Sperrwasserkanal eines Sperrwassersystems im Bereich des ersten Dichtmittels einmündet, wobei der Sperrwasserkanal über eine ringförmige düsenartige Querschnittsverengung mit einer Dichtkammer strömungsverbindbar ist, dass zwischen der Mündung des Sperrwasserkanals und der Querschnittsverengung ein einseitig dichtendes zweites Dichtmittel angeordnet ist, welches den Durchfluss vom Sperrwasserkanal zur Dichtkammer ermöglicht und in der Gegenrichtung unterbindet, und dass das zweite Dichtmittel durch eine in Richtung der Dichtkammer öffnende Lippendichtung gebildet ist.

Radialpumpen der eingangs genannten Art dienen zum Fördern von Schlamm und feststoffbeladenen Flüssigkeiten. Derartige Schlammpumpen werden beispielsweise in der Erzaufbereitung der Bergindustrie oder für den Abtransport der Asche aus Wärmekraftwerken oder für den Transport von Kohle und Mineralien über weite Strecken eingesetzt. Schlammpumpen unterliegen aufgrund ihres Kontaktes mit Feststoffen, insbesondere im Bereich der Wellenabdichtung, erhöhter Abrasion.

Als Dichtmittel werden bei Schlammpumpen vorwiegend Zentrifugaldichtungen und Stopfbuchsendichtungen eingesetzt. Aufgrund der Abrasion müssen bei Schlammpumpen besondere Vorkehrungen getroffen werden, um einen erhöhten Verschleiß der Dichtmittel zu vermeiden.

Weiche Stopfbuchsendichtungen stehen nach der Zentrifugaldichtung an zweiter Stelle bei den in der Förderung von feststoffbeladenen Flüssigkeiten gebräuchlichsten Dichtungen. Jede Stopfbuchsendichtung besteht aus einer Reihe von weichen Dichtringen, die in eine Kammer (Stopfbuchse) gegen eine Wellenschutzhülse gepresst sind. Diese Art von Dichtungen benötigen zwischen der rotierenden Wellenschutzhülse und den komprimierten Dichtringen kontinuierliche Flüssigkeitsschmierung und Kühlung, um eine Überhitzung durch Reibung zu verhindern. Schlamm stellt aber keine geeignete Flüssigkeit dafür dar, da die Partikel die Wellenschutzhülse sehr rasch durchreiben würden. Es muss zusätzlich sauberes Sperrwasser extern zugeführt werden, um die Partikel von der Dichtung zu spülen, während gleichzeitig für die notwendige Schmierung und Kühlung der Dichtringe gesorgt wird. Die Qualität, Quantität und der Druck dieses Stopfbuchsendichtungswassers sind von größter Bedeutung und müssen dem entsprechenden Betrieb genau angepasst werden.

Die US 5,609,468 A offenbart eine radiale Dichtungsvorrichtung mit einem Zentrifugalrad und einer Stopfbuchsenpackung, welche zum Zentrifugalrad hin und nach außen mit Sperrwasser oder Fett abdichtet. Die Zentrifugaldichtung ist eine dynamische Trockendichtung, die nur funktioniert, während die Pumpe rotiert und keine Dichtwirkung hat, wenn die Pumpe steht. Eine Nebendichtung - die Stopfbuchsenpackung - hält die Flüssigkeit in der Pumpe, wenn diese steht. Die Zentrifugaldichtung besteht aus Rückenschaufeln am Laufrad und einem Zentrifugalrad, das in einem Gehäuseteil hinter dem Laufrad liegt und sich zusammen mit dem Laufrad dreht. Das rotierende Zentrifugalrad erzeugt eine derartige Druckverteilung, dass eine feststoffbeladene Flüssigkeit nach außen gedrängt wird und dadurch die Nebendichtung von ihr freigehalten wird. Die Zentrifugaldichtung ist die gebräuchlichste Dichtung bei der Förderung von feststoffbeladenen Flüssigkeiten, da sie sehr wirksam und einfach ist. Allerdings ist sie durch den saugseitigen Druck und die Pumpendrehzahl eingeschränkt. Ein Nachteil der Zentrifugalraddichtung ist, dass bei einem saugseitigen höheren Zulaufdruck und die daraus resultierende Abhängigkeit von der Drehzahl die Funktion des Zentrifugalrades stark eingeschränkt wird. Bei einer mittleren Drehzahl der Schlammpumpe beträgt der zulässige Vordruck 3 Meter Wassersäule bis 5 Meter Wassersäule. Sollte die Drehzahl mittels Frequenzumformer geregelt werden, wird die Frequenz gezielt nach oben und unten geregelt und zwar zeitverzögert gegenüber dem normalen Hochlauf, so dass eine störungsfreie Funktion des Zentrifugalrades nicht mehr gegeben ist. Somit kann Schlamm auf die Stopfbuchse treffen und diese samt Wellenschutzhülse innerhalb kürzester Zeit beschädigen.

Die US 5,772,218 beschreibt verschiedene Stopfbuchsabdichtungen mit Sperrwasser bzw. Fettschmierung für eine Schlammpumpe. Die Abdichtvorrichtung weist zumindest zwei Stopfbuchspakete auf, welche in einer Hülse angeordnet sind. Eine axiale Kompression der Packungshülse wird zumindest teilweise auf eine radiale Kompression der Stopfbuchspackungen übertragen. Eine Zentrifugalradabdichtung ist nicht vorgesehen. Diese Abdichtvorrichtung funktioniert nur mit Sperrwasser. Nachteilig ist dabei, dass große Sperrwassermengen und hoher Sperrwasserdruck erforderlich sind, wobei der Sperrwasserverbrauch stark von der Partikelgröße im Schlamm abhängt.

Weiters ist es bekannt, Stopfbuchsabdichtungen mit vollem Sperrwasserdurchfluss bei stark verunreinigten Fördermedien einzusetzen. Diese haben den Nachteil, dass ein besonders hoher Sperrwasserbedarf erforderlich ist.

Lippendichtungen wurden bisher aufgrund ihrer Anfälligkeit gegen Abrasion bei Schlammpumpen nicht eingesetzt. Weiters sind Lippendichtungen bei Trockenlauf sehr anfällig gegen thermische Zerstörung.

Die DE 2 212 165 A1 offenbart eine Dichtungsvorrichtung mit einer ersten und einer zweiten Lippendichtung, die durch einen Abstandshalter voneinander getrennt sind. Die Dichtungen sind dabei als Gummilippendichtungen mit Dichtungslippen ausgeführt, die unter der Vorspannung von Schraubenfedern an der Welle anliegen. Die Dichtungen sind durch einen Abstandsring im Abstand zueinander angeordnet. Der Abstandsring ist mit einem radialen Durchlass versehen, durch welchen eine durch die Dichtungen, den Abstandsring und die Welle gebildete Füllkammer mit unter Druck stehender Sperrluft beaufschlagbar ist. Die Sperrluft verhindert ein Eintreten der Flüssigkeit, gegen welche abgedichtet werden soll, in die Füllkammer. Die Dichtung stellt somit eine trockene Dichtung dar, welche - trotz einer gewissen Kühlwirkung der Spülluft - einem erhöhten Verschleiß ausgesetzt ist. Für den Einsatz in einer Schlammpumpe ist diese Dichtungsvorrichtung keinesfalls geeignet.

Die DE 32 33 760 A1 offenbart eine ähnliche Dichtungsanordnung mit zwei in einer Dichtungskammer Rücken gegen Rücken unter Freilassung eines Abstandszwischenraumes angeordneten Lippendichtungen, wobei in den Abstandszwischenraum über eine Öffnung eine Luft/Schmiermittel-Mischung einführbar ist. Im Betrieb hebt die Druckluft die Kraft zwischen den Dichtungslippen und der Welle praktisch auf. Da ein vollkommen einheitlicher Luftspalt zwischen jeder Dichtungslippe und der Welle und damit ein reibungs- und verschleißloser Betrieb in der Praxis nicht möglich ist, wird eine geringe Schmiermittelmenge in den Luftstrom eingeführt, mit welcher jede Dichtungslippe ausreichend geschmiert wird. Auch diese Dichtungsanordnung wäre für den Einsatz in einer Schlammpumpe aber nicht geeignet, da vagabundierende Feststoffteilchen nicht davon abgehalten werden, in den Bereich der Dichtlippen vorzudringen.

Die DE 199 04 761 A1 beschreibt eine Vorrichtung zum Abdichten einer Papierstoffsuspension an einer Wellendurchführung, welche ein Dichtungsgehäuse aufweist, das die Welle an der abzudichtenden Stelle der Maschine auf einem Teil ihrer axialen Länge umgibt und mehrere Dichtringe aufweist, die den Radialspalt zwischen dem Dichtungsgehäuse und der abzudichtenden Welle überbrücken. Die Dichtringe sind dabei als gleichsinnig orientierte Lippendichtungen ausgeführt, welche durch Distanzringe voneinander axial getrennt sind, wobei zwischen dem Distanzring und der Welle ein Ringraum zu Aufnahme einer nachfüllbaren viskosen Dichte- oder Schmiermasse, beispielsweise eines Schmierfettes, frei bleibt. Diese Vorrichtung wird - aufgrund der Aufgabenstellung - ausdrücklich ohne einen stetigen Sperrwasserstrom betrieben. Dadurch ist sie allerdings für den Einsatz in einer Schlammpumpe ungeeignet, da ein Eindringen von Feststoffteilchen nicht verhindert werden kann. Schon geringe Mengen an Feststoffteilchen aus dem Schlamm können aber bereits eine rasche Zerstörung der Lippendichtung verursachen.

Die DE 26 43 769 A1 zeigt eine Abdichtung für sich drehende Wellen, bei der ein Druckmittel zu Abdichtungselementen zwischen Welle und Abdichtungsgehäuse zwecks einseitiger Abdichtung eingeleitet wird, wobei die durch Lippenabdichtungen gebildeten Abdichtungselemente einen Ringspalt für den Austritt des durch Treibwasser gebildeten Druckmittels bilden und der austrittsseitige Bereich des Ringspaltes gegen das abzudichtende Medium gerichtet ist. Das Druckmittel bewirkt ein Anheben der elastischen Dichtlippen von der umlaufenden Welle bis zur Freigabe des für die Druckwassermenge erforderlichen Querschnittes. Durch das Druckmittel werden die Dichtlippen von der Welle abgehoben und ein Verschleiß vermieden, wobei Flüssigkeit, bzw. Luft zwischen Dichtlippe und Welle einerseits und von dem Raum hinter der rückseitigen Dichtlippe andererseits zur Seite der abzudichtenden Flüssigkeit gefördert wird. Das Treibwasser tritt mit hoher Geschwindigkeit aus der durch die Dichtlippen gebildeten Düse aus, wodurch Medium aus dem hinter der rückwärtigen Dichtlippe liegenden Raum angesaugt wird. Der abzudichtenden Flüssigkeit gegenüber wird deshalb zweckmäßig ein offener Luftraum oder ein belüfteter Raum mit einer umweltfreundlichen Sperrflüssigkeit gefüllt angeordnet. Der in der Veröffentlichung beschriebene Saugeffekt setzt aber voraus, dass in Strömungsrichtung des Treibwassers nach der Lippenabdichtung ein unbehinderter Abfluss möglich ist und somit keine zu starke Drosselwirkung durch den Gehäuserand zwischen dem Ringraum und dem abzudichtenden Raum auftritt.

Die EP 0 374 713 A2, von der bei der Formulierung des Anspruchs 1 ausgegangen worden ist, offenbart eine Wellenabdichtung an Strömungsmaschinen, wobei in einem Ringraum zwischen Pumpenwelle und Gehäuse ein durch eine Stopfbuchsenpackung gebildetes erstes Dichtmittel und ein einseitig dichtendes zweites Dichtmittel angeordnet ist. Im Bereich des ersten Dichtmittels mündet ein Sperrwasserkanal ein, wobei der Sperrwasserkanal über eine ringförmige düsenartige Querschnittsverengung mit einer Dichtkammer strömungsverbindbar ist. Die Querschnittsverengung zwischen dem zweiten Dichtmittel und der Dichtkammer wird dabei durch das Gehäuse gebildet.

Die DE 1 037 269 B beschreibt eine Wellendichtung für Kreiselpumpen zur Förderung von schleifenden oder aggressiven Flüssigkeiten, welche aus einer die Welle ringförmig umgebenden Kammer besteht, die durch schräg an die Welle anlaufende, aus gummiartigen nachgiebigen Material bestehenden Dichtlippen begrenzt wird. In die Kammer fließt eine unter Überdruck stehende Sperrflüssigkeit hinein, welche durch ringförmige Spalten zwischen den Dichtlücken und der Welle herausfliesen kann. Die Kammer wird durch eine Büchse gebildet, die mit den Dichtlippen aus einem Stück besteht, und auf einen Teil Ihrer axialen Länge als Gleitlagerschale ausgebildet ist.

Die DE 24 14 406 A1 offenbart eine Kreiselpumpe mit einem im Spiralgehäuse auf der der Zulauföffnung abgekehrten Seite des Laufrades angeordneten Entlastungsrad, welches auf der dem Laufrad abgekehrten Seite Entlastungsschaufeln aufweist.

Aufgabe der Erfindung ist es, diese Nachteile zu vermeiden und eine radiale Dichtungsvorrichtung zu schaffen, welche für geringe Sperrwassermengen bei niedrigen Sperrwasserdrücken geeignet ist.

Erfindungsgemäß wird dies dadurch erreicht, dass die Öffnungsbreite der Querschnittsverengung mindestens um 0,1 mm größer ist als das Toleranzplusmaß der Pumpenwelle oder einer Wellenschutzhülse, dass die Querschnittsverengung und/oder der Sperrwasserleitring aus einem Wellenwerkstoff, vorzugsweise aus C45, besteht und in das Gehäuse eingepresst ist und dass auf der Pumpewelle ein in der Dichtkammer umlaufendes Zentrifugalrad befestigt ist.

Die düsenartige Querschnittverengung ist (in Richtung des Sperrwasserflusses betrachtet) stromabwärts der Lippendichtung angeordnet, welche auf das Sperrwasser einerseits eine Drosselwirkung ausübt und andererseits bewirkt, dass das Sperrwasser mit erhöhter Geschwindigkeit in die Dichtkammer einströmt. Dadurch wird ein Eindringen von Feststoffteilchen in den die Lippendichtung aufnehmenden Ringraum verhindert.

Besonders vorteilhaft ist es, wenn zwischen dem ersten und dem zweiten Abdichtmittel im Mündungsbereich des Sperrwasserkanals ein Sperrwasserleitring angeordnet ist, welcher das Sperrwasser zumindest teilweise von der Mündung zum zweiten Dichtmittel leitet.

Im Rahmen der Erfindung ist weiters vorgesehen, dass die Sperrwasserzufuhr, vorzugsweise über ein Elektromembranventil, mit der Pumpe, vorzugsweise gleichzeitig, ein- oder ausschaltbar ist.

Mit dem Einschalten des Elektromotors der Pumpe wird gleichzeitig ein Elektromembranventil angesteuert, welches das Sperrwasser zur Pumpe freigibt. Das Sperrwasser wird durch das Sperrwasserleitgehäuse zur Stopfbuchspackung gelenkt und dient hier zur Kühlung und Schmierung. Andererseits wird das Sperrwasser durch das Sperrwasserleitgehäuse zur Lippendichtung geführt. Der Sperrwasserdruck öffnet die Lippendichtung und gibt das Sperrwasser frei, so dass das Sperrwasser zur düsenartigen Querschnittsverengung strömen kann.

Die Erfindung wird im Folgenden anhand der Figuren näher erläutert. Es zeigen:

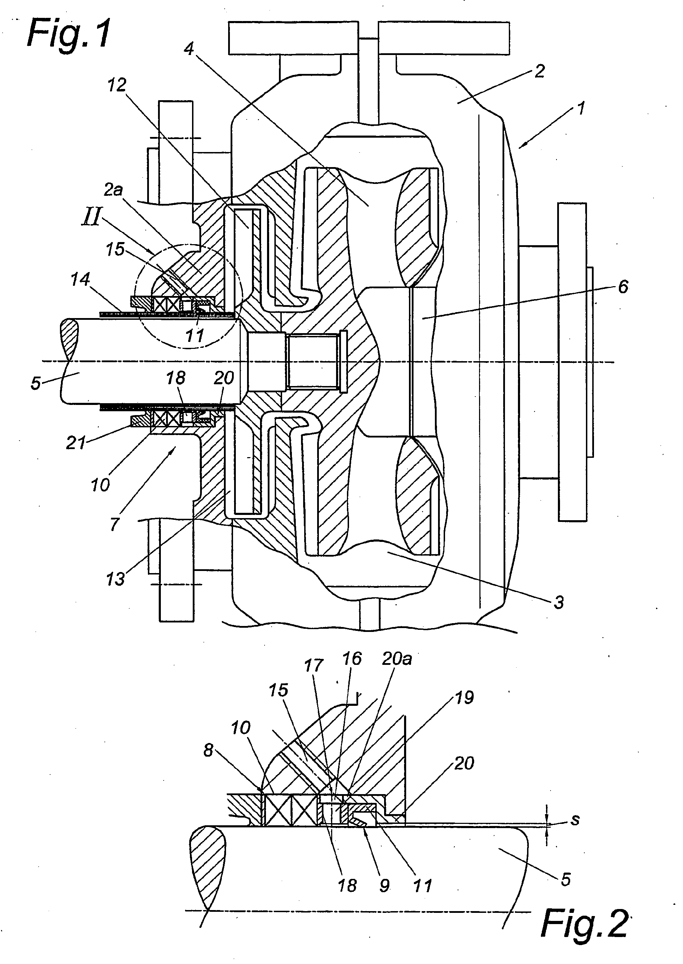

- Fig. 1: eine Radialpumpe mit der erfindungsgemäßen Abdichtvorrichtung in einem Längsschnitt; und
- Fig. 2: das Detail II aus Fig. 1.

Die Radialpumpe 1 weist ein Gehäuse 2 mit einer Pumpekammer 3 auf, in welchem ein Pumpenlaufrad 4 angeordnet ist. Das Pumpenlaufrad 4 ist fest mit einer Pumpenwelle 5 verbunden. Mit Bezugszeichen 6 ist der Pumpenzulauf bezeichnet.

Zur Abdichtung weist die Radialpumpe 1 eine radiale Dichtungsvorrichtung 7 mit einem ersten Dichtmittel 8 und einem zweiten Dichtmittel 9 auf. Das erste Dichtmittel 8 ist als Stopfbuchspackung 10, das zweite Dichtmittel 9 als Lippendichtung 11 ausgebildet. Die Stopfbuchspackung 10 wird durch eine Stopfbuchsbrille 21 gegen den Sperrwasserleitring 18 gepresst.

Teil der Dichtungsvorrichtung ist weiters ein mit der Pumpenwelle 5 drehfest verbundenes Zentrifugalrad 12, welches in einer Dichtkammer 13 des Gehäuses 2 umlaufend angeordnet ist.

Mit Bezugszeichen 14 ist eine Wellenschutzhülse bezeichnet.

Zwischen dem ersten Dichtmittel 8 und dem zweiten Dichtmittel 9 mündet ein Sperrwasserkanal 15 in einem Ringraum 16 um die Pumpewelle 5 bzw. die Wellenschutzhülse 14 ein. Die Mündung ist mit Bezugszeichen 17 bezeichnet. Im Ringraum 16 ist ein Sperrwasserleitring 18 angeordnet, welcher das Sperrwasser über radiale Bohrungen 19 der Lippendichtung 11 zuführt. Anschließend an die Lippendichtung 11 ist eine im Wesentlichen ringförmige düsenartige Querschnittsverengung 20 in das Gehäuse 2 eingepresst. Die düsenartige Querschnittsverengung 20 wird aus dem Wellenwerkstoff C45 gefertigt. Die ringförmige Düsenöffnung s ist mindestens 0,1 mm größer als das Toleranzplusmaß der Pumpenwelle 5 bzw. der Wellenschutzhülse 14.

In die düsenartige Querschnittsverengung 20 wird an der der Düsenöffnung s abgewandten Seite eine zylindrische Ausnehmung eingedreht, in die die Lippendichtung 11 eingepresst wird. Die Länge der düsenartigen Querschnittsverengung 20 ist so bemessen, dass diese bei eingepresster Lippendichtung 11 noch mindestens 2 mm an der der Düsenöffnung s abgewandten Seite vorragt. Dieser Vorsprung 20a von etwa 2 mm ist leicht konisch ausgeführt, um eine leichte Aufnahme des Sperrwasserleitringes 18 zu ermöglichen. Der Sperrwasserleitring 18 ist ebenfalls aus dem Wellenwerkstoff C45 gefertigt. Die Lippendichtung 11 besteht bevorzugt aus einem PTFE-Werkstoff (Polytetrafluorethylen, Teflon).

Der Sperrwasserleitring 18 ist außen so weit abgedreht, dass der Ansatz 20a der düsenartigen Querschnittsverengung 20 den Sperrwasserleitring 18 umfassen bzw. dass der Sperrwasserleitring 18 in die düsenartige Querschnittsverengung 20 leicht eingesetzt werden kann. Innen ist der Sperrwasserleitring 18 so weit eingedreht, dass ein freier Durchfluss zur abgeschrägten Seite der Lippendichtung 11 entsteht.

Das Sperrwasser wird über den Sperrwasserkanal 15 von außen nach innen geleitet. Das Sperrwasser gelangt dabei über die radialen Bohrungen 19 zur Lippendichtung 11 und weiter zur düsenartigen Querschnittsverengung 20.

Gegenüber dem Gehäuse 2a des Zentrifugalrades 12.ist der Sperrwasserleitring 18 so im Durchmesser gestaltet, dass ein ausreichendes Spiel von zum Beispiel 0,5 mm zum Gehäuse 2a des Zentrifugalrades 12 verbleibt. Auf der Innenseite des Sperrwasserleitringes 18 muss ein Spalt von etwa 1 mm verbleiben, damit die Stopfbuchspackung 10 mit Sperrwasser zwecks Kühlung und Schmierung versorgt werden kann. Die gesamte Einheit - Stopfbuchspackung 10 - Sperrwasserleitring 18 - Lippendichtung 11 - düsenartige Querschnittsverengung 20 - wird mittels der Stopfbuchsbrille 21 in das Gehäuse 2a des Zentrifugalrades 12 eingepresst.

Mit dem Einschalten der Radialpumpe 1 wird gleichzeitig über ein nicht weiter dargestelltes Elektromembranventil die Sperrwasserzufuhr freigegeben. Das Sperrwasser fließt über das Sperrwasserleitgehäuse 18 zur Wellenschutzhülse 14 und schmiert die Stopfbuchspackung 10. Gleichzeitig fließt das Sperrwasser zur Lippendichtung 11, drückt diese nach außen und fließt weiter zur düsenartigen Querschnittsverengung 20. Wenn das Sperrwasser über den Sperrwasserleitring 18 auf die Lippen der Lippendichtung 11 trifft, werden diese geöffnet und das Sperrwasser spritzt über die düsenartige Querschnittsverengung 20 in die Dichtkammer 13 ein. Eventuelle Partikel werden von der Spritzwasseröffnung s wegbefördert. Durch das Zentrifugalrad 12 wird das Fördermedium von der düsenartigen Querschnittsverengung 20 ferngehalten. Dadurch braucht der Druck des Sperrwassers nur leicht über dem Zulaufdruck liegen. Wenn der Druck an der düsenartige Querschnittsverengung 20 bei etwa 0,5 bar über dem Pumpenzulaufdruck liegt, ist ein Kontakt des Fördermediums mit der düsenartigen Querschnittsverengung 20 nicht möglich. Dies verringert den Verschleiß der Dichtungsvorrichtung.

Wird die Radialpumpe 1 ausgeschaltet, so wird gleichzeitig die Sperrwasserzufuhr durch Schließen des Elektromembranventils unterbunden. Dies führt zu einem Schließen der Lippendichtung 11, wodurch ein eventuelles Eintreten des Fördermediums verhindert wird.

Nach Abschalten der Pumpe 1 dreht das Pumpenlaufrad 6 und das Zentrifugalrad 12 aufgrund ihrer Massenträgheit eine zeitlang nach, bevor sie zum Stillstand kommen. Dies bewirkt, dass hinter dem Zentrifugaldichtrad 12 eine leichte Saugwirkung auftritt und den Dichtraum 13 leersaugen würde. Durch das Zurückfließen des Fördermediums würden Feststoffe in den Ringraum 16 des Gehäuse 2a des Zentrifugalrades 12 eindringen und hier einen Verschleiß hervorrufen. Durch die Lippendichtung 11 wird das Eindringen der Feststoffe in den Ringraum 16 zuverlässig unterbunden.

Mit der beschriebenen radialen Dichtungsvorrichtung wird eine sichere Abdichtung ermöglicht, wobei der Sperrwasserbedarf wesentlich gesenkt werden kann. Messungen haben ergeben, dass beispielsweise bei einer Fördermenge von 100 m³/h der Sperrwasserbedarf auf 30 l/h minimiert werden kann, abhängig von der Düsengenauigkeit und dem Sperrwasserdruck.

## Patentansprüche

1. Radialpumpe (1), insbesondere Schlammpumpe, die ein Gehäuse (2, 2a) mit einer darin befindlichen Pumpenkammer (3) und ein auf einer Pumpenwelle (5) befestigtes Pumpenlaufrad (4) aufweist, mit einer radialen Dichtungsvorrichtung (7), wobei in einem Ringraum (16) zwischen Pumpenwelle (5) und Gehäuse (2a) zumindest ein, vorzugsweise durch zumindest eine Stopfbuchsenpackung (10) gebildetes, erstes Dichtmittel (8) angeordnet ist, und wobei ein Sperrwasserkanal (15) eines Sperrwassersystems im Bereich des ersten Dichtmittels (8) einmündet, wobei der Sperrwasserkanal (15) über eine ringförmige düsenartige Querschnittsverengung (20) mit einer Dichtkammer (13) strömungsverbindbar ist, dass zwischen der Mündung (17) des Sperrwasserkanals (15) und der Querschnittsverengung (20) ein einseitig dichtendes zweites Dichtmittel (9) angeordnet ist, welches den Durchfluss vom Sperrwasserkanal (15) zur Dichtkammer (13) ermöglicht und in der Gegenrichtung unterbindet, und dass das zweite Dichtmittel (9) durch eine in Richtung der Dichtkammer (13) öffnende Lippendichtung (11) gebildet ist, **dadurch gekennzeichnet, dass** die Öffnungsbreite (s) der Querschnittsverengung (20) mindestens um 0,1 mm größer ist als das Toleranzplusmaß der Pumpenwelle (5) oder einer Wellenschutzhülse (14), dass die Querschnittsverengung (20) und/oder ein Sperrwasserleitring (18) aus einem Wellenwerkstoff, vorzugsweise aus C45, besteht und in das Gehäuse (2a) eingepresst ist und dass auf der Pumpewelle (5) ein in der Dichtkammer (13) umlaufendes Zentrifugalrad (12) befestigt ist.

2. Radialpumpe (1) nach Anspruch 1, **dadurch gekennzeichnet, dass** zwischen dem ersten und dem zweiten Abdichtmittel (8, 9) im Bereich der Mündung (17) des Sperrwasserkanals (15) der Sperrwasserleitring (18) angeordnet ist, welcher das Sperrwasser zumindest teilweise von der Mündung (17) zum zweiten Dichtmittel (9) leitet.

3. Radialpumpe (1) nach Anspruch 1 oder 2, **dadurch gekennzeichnet, dass** die Sperrwasserzufuhr, vorzugsweise über ein Elektromembranventil, mit der Radialpumpe (1), vorzugsweise gleichzeitig, ein- oder ausschaltbar ist.

## Claims

1. A radial-flow pump (1), especially a sludge pump, comprising a housing (2, 2a) with a pump chamber (3) disposed therein and a pump impeller (4) fixed to a pump shaft (5), and a radial sealing apparatus (7), with at least one first sealing means (8), preferably formed by at least one gland packing (10), being arranged in an annular space (16) between the pump shaft (5) and the housing (2a), and with a seal water duct (15) of a seal water system opening into the region of the first sealing means (8), with the seal water duct (15) being connectible in terms of flow with a sealing chamber (13) via an annular nozzle-shaped cross-sectional constriction (20), a unilaterally sealing second sealing means (9) being arranged between the orifice (17) of the seal water duct (15) and the cross-sectional constriction (20), which second sealing means enables the through-flow from the seal water duct (15) to the sealing chamber (13) and prevents the same in the opposite direction, and the second sealing means (9) being formed by a lip seal (11) opening in the direction of the sealing chamber (13), **characterised in that** the opening width (s) of the cross-sectional constriction (20) is larger by at least 0.1 mm than the tolerance-plus dimension of the pump shaft (5) or a shaft protection sleeve (14), the cross-sectional constriction (20) and/or a seal water guide ring (18) consists of a shaft material, preferably C45, and is pressed into the housing (2a), and a centrifugal wheel (12) revolving in the sealing chamber (13) is fastened to the pump shaft (5).

2. A radial-flow pump (1) according to claim 1, **characterised in that** the seal water guide ring (18) is arranged between the first and second sealing means (8, 9) in the region of the orifice (17) of the seal water duct (15), which guide ring guides the seal water at least partly from the orifice (17) to the second sealing means (9).

3. A radial-flow pump (1) according to claim 1 or 2, **characterised in that** the seal water supply with the radial-flow pump (1) can be switched on and off, preferably simultaneously and preferably via an electric diaphragm valve.

## Revendications

1. Pompe radiale (1), notamment pompe à boues comportant un boîtier (2, 2a) avec une chambre de pompe (3) et un rotor de pompe (4) fixé sur un arbre de pompe (5) et un dispositif d'étanchéité (7) radial,
- le volume annulaire (16) entre l'arbre de pompe (5) et le boîtier (2a) comportant au moins un premier moyen d'étanchéité (8) réalisé de préférence par au moins une garniture à presse étoupe (10), un premier moyen d'étanchéité (8), et
- un canal d'eau d'interception hydraulique (15) d'un système d'eau d'interception débouchant dans la zone du premier moyen d'étanchéité (8),
- le canal d'eau d'interception hydraulique (15) communiquant par une réduction de section (20) en forme de buse annulaire avec une chambre d'étanchéité (13),
- un second moyen d'étanchéité (9), entre l'embouchure (17) du canal d'eau d'intercepteur hydraulique (15) et le rétrécissement de section (20), assure une étanchéité unilatérale, permettant le passage à partir du canal d'eau d'intercepteur hydraulique (15) vers la chambre d'étanchéité (13) et il interdit ce passage dans la direction opposée, et
- le second moyen d'étanchéité (9) est formé par un joint à lèvre (11) s'ouvrant en direction de la chambre d'étanchéité (13),
**caractérisée en ce que**
- la largeur d'ouverture (s) du rétrécissement de section (20) dépasse au moins de 0,1 mm la mesure maximale de tolérance de l'arbre de pompe (5) ou d'un manchon de protection d'arbre (14),
- le rétrécissement de section (20) et/ou une bague de guidage d'eau d'interception (18) sont réalisés en un matériau ondulé de préférence en C45 et ils sont pressés dans le boîtier (2a), et
- l'arbre de pompe (5) porte solidairement un rotor centrifuge (12) tournant dans la chambre d'étanchéité (13).

2. Pompe radiale (1) selon la revendication 1,
**caractérisée en ce que**
dans la zone de l'embouchure (17) du canal d'eau d'interception (15) entre le premier et le second moyens d'étanchéité (8, 9), se trouve la bague de guidage d'eau d'interception (18) conduisant l'eau d'interception au moins un partie de l'embouchure (17) vers le second moyen d'étanchéité (9).

3. Pompe radiale (1) selon la revendication 1 ou 2,
**caractérisée en ce que**
l'alimentation en eau d'interception se fait de préférence par l'intermédiaire d'une soupape à membrane électromagnétique avec la pompe radiale (1) en étant de préférence commutable pour être fermée ou ouverte simultanément.
